(19) Europäisches Patentamt
European Patent Office
Office européen des brevets

(11) **EP 3 845 814 B1**

(12) **EUROPEAN PATENT SPECIFICATION**

(45) Date of publication and mention
of the grant of the patent:
**16.11.2022 Bulletin 2022/46**

(21) Application number: **19220166.3**

(22) Date of filing: **31.12.2019**

(51) International Patent Classification (IPC):
**F23R 3/44** (2006.01)     **F02C 9/28** (2006.01)
**F02C 9/50** (2006.01)     **F23N 5/16** (2006.01)
**F23N 5/24** (2006.01)

(52) Cooperative Patent Classification (CPC):
**F23R 3/44; F02C 5/02; F02C 9/266;**
F23R 2900/00013; F23R 2900/03342

(54) **GAS TURBINE ENGINE WITH ACTIVE PROTECTION FROM PULSATIONS AND A METHOD OF OPERATING A GAS TURBINE ENGINE**

GASTURBINENMOTOR MIT AKTIVEM SCHUTZ VOR PULSATIONEN UND VERFAHREN ZUM BETREIBEN EINES GASTURBINENMOTORS

MOTEUR À TURBINE À GAZ COMPORTANT UNE PROTECTION ACTIVE CONTRE LES PULSATIONS ET PROCÉDÉ DE FONCTIONNEMENT D'UN MOTEUR DE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.07.2021 Bulletin 2021/27**

(73) Proprietor: **Ansaldo Energia Switzerland AG 5400 Baden (CH)**

(72) Inventors:
• **CUQUEL, Alexis 5400 BADEN (CH)**

• **GHIRARDO, Giulio 5400 BADEN (CH)**
• **BOTHIEN, Mirko Ruben 8037 ZURICH (CH)**

(74) Representative: **Bernotti, Andrea et al Studio Torta S.p.A. Via Viotti, 9 10121 Torino (IT)**

(56) References cited:
EP-A1- 2 887 037     EP-A1- 3 070 407
US-A1- 2007 062 196     US-A1- 2015 068 294
US-A1- 2015 345 402

**Description**

TECHNICAL FIELD

The present invention relates to a gas turbine engine with active protection from pulsations and to a method of operating a gas turbine engine.

BACKGROUND

As known, flexible control of gas turbines in power plants has become an objective of primary importance over the last years. On the one hand, in fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require flexible operation.

Such flexible operation, however, increases the risk that gas turbines undergo critical conditions, because a broad operation range is to be accounted for. Moreover, ageing of components may cause drift of critical conditions, so that dangerous states of vibration may arise during machine lifetime because of deviation from the design characteristics. Indeed, in the field of gas turbines, it is well known that mechanical and thermoacoustic vibrations may arise in different operating conditions. Such conditions depend on the response of the complex structure of the gas turbines and may widely vary according to the kind and the size of gas turbines and also change over time e.g. due to ageing of components. Operating conditions and frequencies at which oscillations occur may become apparent during the steps of design and test of gas turbines, thus making it possible to provide protective measures such as acoustic dampers. Such measures may become ineffective, however, when conditions change.

Thus, bad combustion conditions may cause serious damage to the machine structure, since some parts, such as thermoinsulating coatings, may easily suffer from vibrations and thermoacoustic pulsations, especially at certain frequencies. As a result, maintenance is required more frequently than it would be desirable. Moreover, despite a constant maintenance, turbine parts may lose effectiveness and no longer be able to adequately provide their function. In the case of thermoinsulating coatings, for example, the loss in effectiveness may lead to serious and even irreversible damage to metallic components that are no longer sufficiently protected.

Other critical events, such as excessive levels of polluting emissions, may not be dangerous for the machine in themselves, but they are anyway to be avoided both to comply with laws and regulations and because also the efficiency of the machine is significantly affected.

Therefore, there is a general interest in improving protection of gas turbines from critical operation conditions, in which dangerous vibrations and/or thermoacoustic pulsations may arise.

US2007/062196 describes a gas turbine engine according to the preamble of claim 1.

SUMMARY OF THE INVENTION

It is thus an object of the present invention to provide a gas turbine engine and a method of operating a gas turbine that allow to overcome or at least attenuate the above described limitations.

According to the present invention, there is provided a gas turbine engine comprising:

a combustor assembly, having a plurality of combustor units; and
a control system, configured to control air supply and fuel supply to the combustor assembly;
the control system comprising:

pulsation sensors coupled to respective combustor units and configured to provide pulsation signals from the respective combustor units, each combustor unit being provided with a respective one of the pulsation sensors; and
a processing unit coupled to the pulsation sensors to receive the pulsation signals and configured to:

determine at least one azimuthal component of the pulsation signals, the azimuthal pulsation component being defined by

$$P^M(t) = \frac{1}{NC} \sum_{N=1}^{NC} P_N(t) e^{iM\theta_N}$$

where NC is a number of can combustors in the combustor assembly, $\theta_N = 2\pi \frac{N-1}{NC}$ is an azimuthal angle of a N-th of the can combustors of the combustor assembly, i is the imaginary unit, and M is an order of the at least one azimuthal component) in the range [-ceil(NC/2) + 1; floor(NC/2)];
determine working time series of spectral parameters form the at least one azimuthal component of the pulsation signals; and
to selectively activate protecting measures based on the working time series and activation criteria.

The monitoring of spectral parameters of pulsation signals allows to identify adverse oscillating phenomena at very early stage and is not sensitive to ageing of components. More precisely, the monitoring carried out by the control system is effective in identifying early rise of adverse phenomena irrespective of whether such phenomena are associated with known critical conditions or are caused by unpredictable events such as ageing.

Protecting measures can change operating conditions of the gas turbine by modifying air and/or fuel supply so as to reduce impact of oscillating phenomena. In some cases, very small changes may be sufficient to bring the gas turbines in conditions of safe operation with low risk of dangerous oscillation. Moreover, protecting measures may be triggered when a clear trend is shown by time series, thus avoiding unnecessary intervention in response to fluctuations that do not actually reflect critical conditions (e.g. statistic errors). The control system may be configured to respond to activation of the protecting measures by directly modifying air supply and/or fuel supply to the combustor assembly or, otherwise, by sending alarm or warning messages that prompt operators to take actions, such as changing operating setpoints and, as a consequence, air supply and/or fuel supply.

According to an aspect of the invention, the activation criteria include value criteria, defined by inadmissible ranges of values of the spectral parameters, in combination with time criteria based on permanence of the spectral parameters in the inadmissible ranges of values.

The use of combined criteria helps reduce unnecessary activation of protecting measures.

According to an aspect of the invention, the time criteria include at least one of:

the spectral parameters of the working time series continuously remaining in the inadmissible ranges of values for at least a first time interval;
the spectral parameters of the working time series continuously or discontinuously remaining in the inadmissible ranges of values for at least a cumulated second time interval within a check window;
a time counter reaching a count threshold, the counter being incremented by the processing unit when the spectral parameters of the working time series are inside the inadmissible ranges of values and remaining unchanged or being decremented by the processing unit when the spectral parameters of the working time series are outside the inadmissible ranges of values.

Appropriate time criteria are thus made available and may be used in accordance to the design preferences, in order to balance timely activation of protection measures and effective rejection of false positives.

According to an aspect of the invention, the spectral parameters comprise at least one peak amplitude in a respective programmed frequency range and the processing unit is further configured to compare the working time series of the peak amplitude with a respective individual amplitude threshold, the inadmissible ranges of values including peak amplitude values greater than the individual amplitude threshold.

In this manner, strongest oscillations can be easily identified and distinguished from background noise that is not an indicator of potentially dangerous conditions, thus allowing timely activation of the protecting measures as soon as critical oscillations rise at any one of the monitored combustor units.

According to an aspect of the invention, the spectral parameters comprise a plurality of peak amplitudes in respective programmed frequency bands for the at least one azimuthal component of the pulsation signals and the processing unit is further configured to compare a combination of the working time series of the peak amplitudes with a combination amplitude threshold, the inadmissible ranges of values including the values of the combination greater than the combination amplitude threshold.

Monitoring combinations of peak amplitudes in a plurality of frequency bands can reveal effects of nonlinear coupling of acoustic modes, which may otherwise be missed. Protection is thus further improved.

According to an aspect of the invention, the spectral parameters comprise at least one peak frequency of a respective peak amplitude and the processing unit is further configured to compare the working time series of the peak frequency with a lower frequency threshold and an upper frequency threshold, the inadmissible ranges of values including a frequency band delimited by the lower frequency threshold and the upper frequency threshold.

The structure of the combustor assembly may show resonant behavior, sometimes even in very narrow bands, when oscillations approach eigenfrequencies of the structure. Hence, bad oscillations may be triggered even by relatively small amplitudes in critical bands, i.e. relatively small oscillations near eigenfrequencies may be amplified and cause resonance phenomena. Monitoring of oscillation peak frequencies allows to prevent the gas turbine from remaining in operating conditions that may trigger resonance. Small adjustment of air and/or fuel supply may in many cases change operating conditions enough to avoid resonant oscillations.

According to an aspect of the invention, the processing unit is configured to determine the azimuthal components) of all an orders in the range [-ceil(NC/2) + 1; floor(NC/2)].

According to an aspect of the invention, the processing unit is configured to determine a combination of azimuthal components) of different orders or of all orders in the range [-ceil(NC/2) + 1; floor(NC/2)] and to determine the working time series from the combination of azimuthal components).

More complete information is thus available for the purpose of protection against resonant oscillation, based not only on pulsations occurring at individual combustor units, but also on correlations between pulsations at different combustor units.

According to an aspect of the invention, the processing unit is configured to determine an in-phase pulsation component as a 0-order azimuthal component of the pulsation signals and to determine the working time series from the in-phase pulsation component), the in-phase pulsation component) being defined by

$$P_{IP}(t) = \frac{1}{NC} \sum_{Ni=1}^{NC} P_{IN}(t)$$

In-phase pulsation component may cause torsional vibration of the rotor. Thus, monitoring the spectral parameters of the in-phase pulsation component allows to activate protecting measures also against torsional vibration of the rotor, which may be thus prevented.

According to an aspect of the invention, the processing unit is configured to determine raw time series of the spectral parameters from the pulsation signals and to determine the working time series from respective raw time series by low-pass filtering.

False positives and short transient phenomena, which are not really significant, may be thus disregarded and unnecessary activation of protection measures is avoided.

According to an aspect of the invention, there is also provided a method of operating a gas turbine comprising a combustor assembly, having a plurality of combustor units, and a control system, configured to control air supply and fuel supply to the combustor assembly each combustor unit (8) being provided with a respective one of the pulsation sensors (12);
the method comprising:

    providing pulsation signals from each of the combustor units;
    determining at least one azimuthal component of the pulsation signals, the azimuthal pulsation component being defined by

$$P^M(t) = \frac{1}{NC} \sum_{N=1}^{NC} P_N(t) e^{iM\theta_N}$$

    where NC is a number of can combustors in the combustor assembly, $\theta_N = 2\pi \frac{N-1}{NC}$ is an azimuthal angle of a N-th of the can combustors of the combustor assembly, $i$ is the imaginary unit, and M is an order of the at least one azimuthal component in the range [-ceil(NC/2) + 1; floor(NC/2)];
    determining working time series of spectral parameters from the at least one azimuthal component of the pulsation signals; and
    selectively activating protecting measures based on the working time series and activation criteria;
    wherein activating protecting measures comprises modifying air supply and/or fuel supply to the combustor assembly.

BRIEF DESCRIPTION OF THE DRAWINGS

The present invention will now be described with reference to the accompanying drawings, which illustrate some non-limitative embodiments thereof, in which:

-   figure 1 is a simplified block diagram of a gas turbine engine in accordance with and embodiment of the present invention;
-   figure 2 is a schematic front view of a combustor assembly of the gas turbine engine of figure 1;
-   figure 3 is a flow chart of a method carried out by a control system of the gas turbine of figure 1, in accordance with an embodiment of the present invention;
-   figure 4 is a graph showing spectral quantities used in the method of figure 3;
-   figures 5 and 6 are graphs showing time series used in the method of figure 3;
-   figures 7-9 are graphs showing time series and alternative activation criteria usable in the method of figure 3;
-   figure 10 is a graph showing time series used in a method carried out by a control system of the gas turbine of figure 1, in accordance with another embodiment of the present invention;
-   figure 11 is a graphs showing activation criteria usable in the method of figure 10;
-   figure 12 is a graph showing time series used in a method carried out by a control system of the gas turbine of figure 1, in accordance with another embodiment of the present invention.

DETAILED DESCRIPTION OF EXEMPLARY EMBODIMENTS

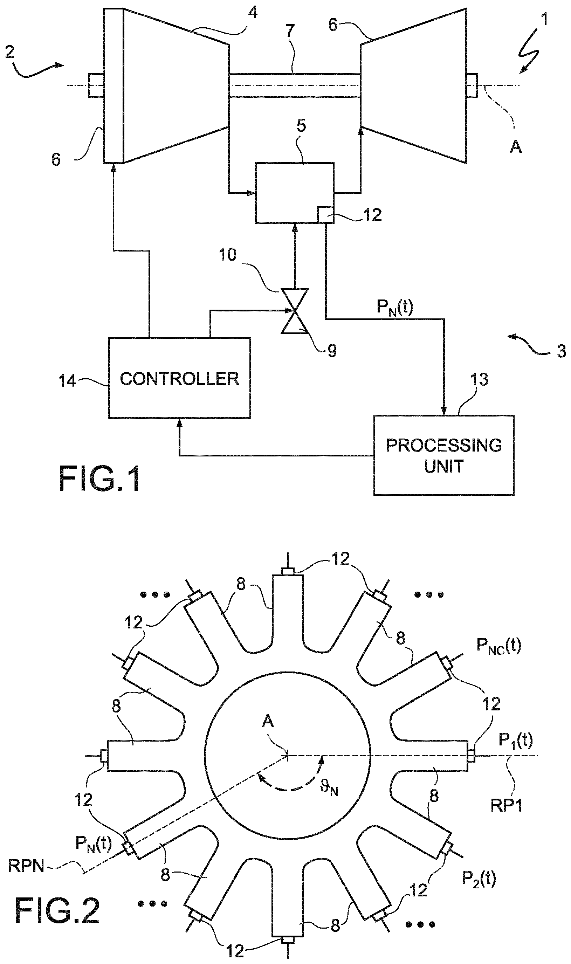

With reference to Figure 1, number 1 defines a gas turbine plant as a whole comprising a gas turbine engine 2 and a control system 3. The gas turbine engine 2, in turn, comprises a compressor 4, a combustor assembly 5 and an expansion section or turbine 6, all extending about an axis A. The compressor 4 and the turbine 6 share a common rotor 7.

The compressor 4 feeds the combustor assembly 5 with an airflow drawn from outside. Air supply to the compressor 4 is controllable by the control system 3 by adjusting orientation of inlet guide vanes 6 of the compressor 4.

The combustor assembly 5, for example a can or can-annular combustor, is provided with a plurality of combustor units 8, which are circumferentially distributed about the axis A, as schematically illustrated in figure 2.

The combustor units 8 mix air from the compressor 4 and fuel from a fuel supply line 9 to form a mixture for combustion. The fuel may be gaseous, for example natural gas or syngas, or liquid, for example gasoil. The gas turbine engine 2 can be structured to use different types of fuel, both gaseous and liquid. Fuel supply is controllable by the control system 3 through a fuel valve system 10.

The turbine 6 receives and expands a flow of hot gas from the combustor assembly 5 to extract mechanical work, which is transferred to an external user, typically an electric generator, here not shown.

The control system 3 comprises pulsation sensors 12, a processing unit 13 and a controller 14. The pulsation sensors 12 may be e.g. pressure sensors or optical sensors.

The pulsation sensors 12 are coupled to respective combustor units 8 and configured to provide pulsation signals $P_N(t)$ in response to pulsations at the respective combustor units 8. In one embodiment, each combustor unit 8 is provided with a respective pulsation sensor 12, hence pulsation signals $P_1(t)$, $P_2(t)$, ..., PNC(t) are provided, NC being the number of combustor units 8 of the combustor assembly 5. Other configurations may be exploited, however, with pulsation sensors 12 associated only with selected combustor units 8, according to design preferences. Any kind of pulsation sensor capable of detecting pressure oscillations inside the combustor units 8 and/or mechanical vibrations of the structure of the combustor units 8 may serve the purpose. For example, piezoelectric pressure or vibration sensors or strain gauges may be used. Pulsation sensors 12 may be provided with detection electronics to supply the pulsation signals $P_N(t)$ in a form determined in accordance with design preferences, e.g. as voltage signals. For example, piezoelectric sensors typically provide charge signals as output. Thus, detection electronics may include charge amplifiers to convert the charge output of the piezoelectric sensors into a voltage output.

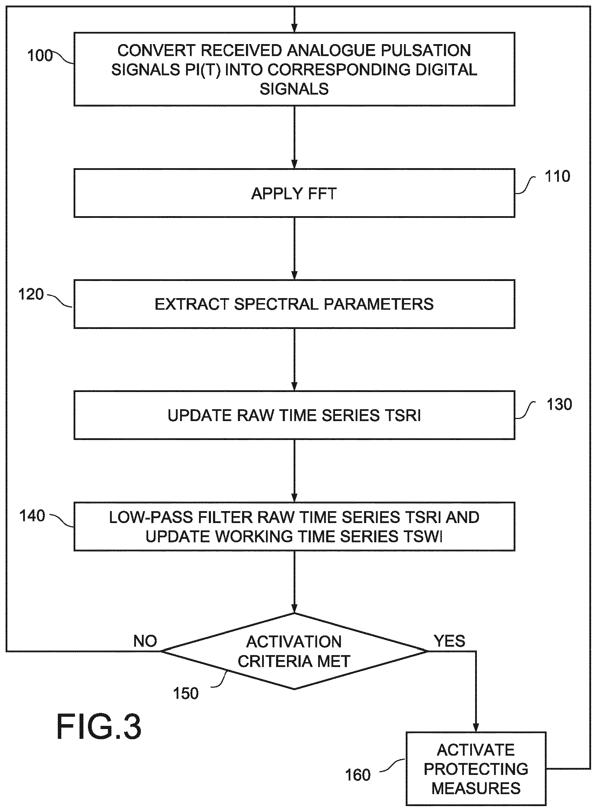

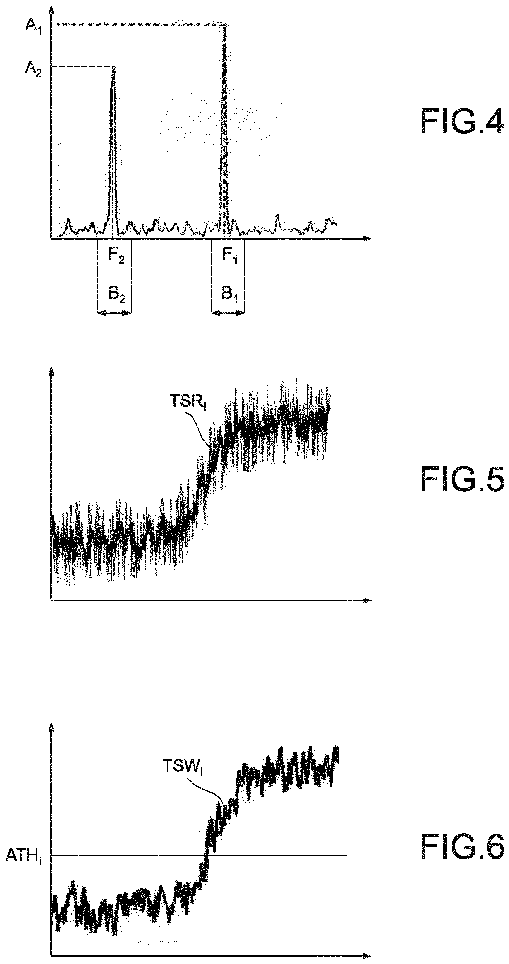

The processing unit 13 is coupled to the pulsation sensors to receive the pulsation signals $P_N(t)$. By the procedure illustrated in figure 3, the processing unit 13 is configured to determine working time series $TSW_N$ of spectral parameters of the pulsation signals $P_N(t)$ (see figures 4-6 and the relevant description as an example), and to selectively activate protecting measures based on the working time series $TSW_N$ and activation criteria. In one embodiment, the protecting measures may include automatic response of the control system 3. In this case, the control system is configured to modify air supply and/or fuel supply to the combustor assembly in response to activation of the protecting measures. The protecting measures may also include sending alarm or warning messages that prompt operators to take actions, such as changing operating setpoints and, as a consequence, air supply and/or fuel supply.

In general, time series are series of data points indexed in time order. Time series may be sequences of data equally spaced in time, hence sequences of discrete-time data. As understood herein, working time series are time series of spectral parameters used in the processing unit 13 for the purpose of implementing pulsation protection. As understood herein, raw time series are time series obtained directly as values of the spectral parameters calculated at successive points in time. In other words, spectra of pulsation signals $P_1(t)$, $P_2(t)$, ..., PNC(t) are determined at successive points in time and spectral parameters of interest are extracted. The succession of the values of the spectral parameters are extracted at each point in time defines the raw time series. The working time series may coincide with the raw time series or may be derived from the raw time series by processing. Processing may include e.g. filtering and is defined so that the resulting working time series are better suited to implementation of the pulsation protection.

Specifically, the processing unit 13 iteratively converts received analogue pulsation signals $P_N(t)$ into corresponding digital signals (figure 3, block 100) and applies Fast Fourier Transform (block 110) to determine series of frequency spectra for each of the pulsation signals $P_N(t)$. At every iteration, the processing unit 13 extracts selected spectral parameters of the frequency spectra (block 120; see also figure 4, wherein the extracted spectral parameters are peak amplitudes $A_1$, $A_2$) and updates the working time series $TSW_N$ based on extracted spectral parameters (blocks 130-140). In other words, each time series $TSW_N$ is based on the series of the values of a respective one of the spectral parameters as determined by the processing unit 13 in subsequent iterations. Values of the working time series $TSW_N$ need not be the exact values of the spectral parameters and processing may be added. In one embodiment, for example, the processing unit 13 updates (block 130) raw time series $TSR_N$ of the spectral parameters (i.e. series of the exact digital values of the spectral parameters, see figure 5 for peak amplitude $A_1$) of the pulsation signals $P_N(t)$ and determines the working time series $TSW_N$ from respective raw time series $TSR_N$ by low-pass filtering (block 140; see also figure 6 for filtered peak amplitude $A_1$). The working time series $TSW_N$ are thus smoothed to reduce false positives and avoid unnecessary activation of the protecting measures. However, in other embodiments, the raw time series of the spectral parameters may be directly used as the working time series $TSW_N$.

Moreover, at every iteration the processing unit 13 checks the updated time series $TSW_N$ on activation criteria (block 150) and activates protecting measures if the activation criteria are met (block 150, output YES; block 160). Then, a new iteration of the procedure is carried out by the processing unit 13 through steps of A/D conversion, FFT, spectral parameter extraction, update of the working time series $TSW_N$ and check of the activation criteria (blocks 100-150). If activation criteria are not met (block 150, output NO), the processing unit 13 directly starts a new iteration of the procedure.

Activation criteria may include a combination of value criteria and time criteria. Value criteria are defined by inadmissible ranges of values of the spectral parameters, such as the time series being inside a forbidden region. Time criteria are based on permanence of the spectral parameters in the inadmissible ranges of values.

Time criteria may include one or more of the following conditions:

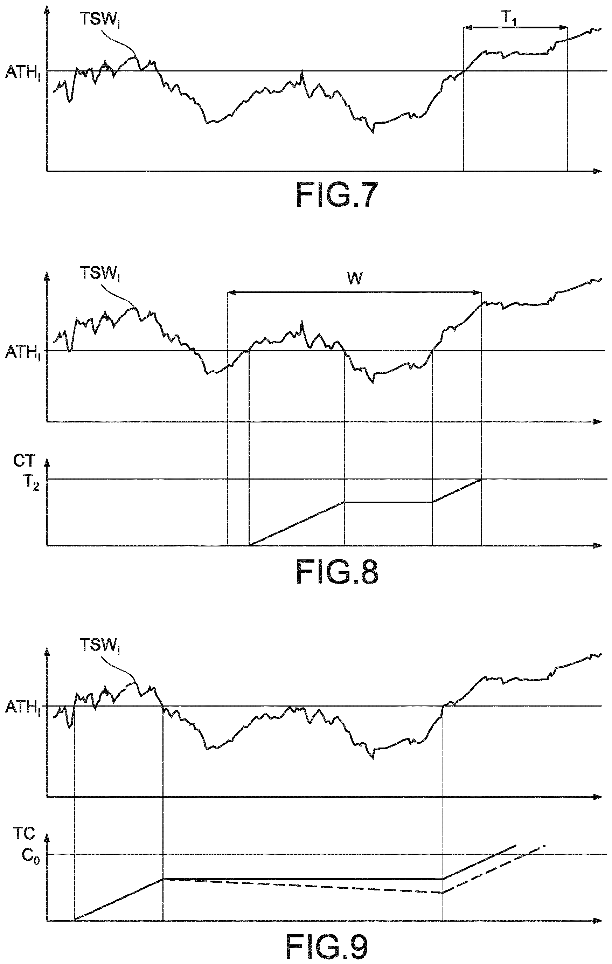

- the spectral parameters of the working time series $TSW_N$ continuously remain in the inadmissible ranges of values for at least a first time interval $T_1$ (in the example of figure 7, which refers to the working time series $TSW_N$ of peak amplitude $A_1$, the inadmissible range of values IRVI includes a region of peak amplitude values greater than an individual amplitude threshold $ATH_N$);
- the spectral parameters of the working time series $TSW_N$ continuously or discontinuously remain in the inadmissible ranges of values IRVI for at least a cumulated second time interval $T_2$ within a check window W (figure 8, where CT is the cumulated time in the forbidden region within the check window W); and
- a time counter TC, which is incremented by the processing unit 13 when the spectral parameters of the working time series $TSW_N$ are inside the inadmissible ranges of values IRVI and otherwise remain unchanged (figure 9, solid line) or is decremented (figure 5, dashed line), reaches a count threshold Co.

Protecting measures may include changes in the operating conditions of the gas turbine engine 2. To this end, the processing unit 13 may adjust set-points for the controller 14, whereby the control system 3 modifies air supply and/or fuel supply to the combustor assembly 5 in response to activation of the protecting measures.

In one embodiment, the spectral parameters comprise at least one peak amplitude $A_1$ (figures 4-6). As understood herein, "peak amplitude" means the amplitude of spectrum peaks in one or more given monitored frequency bands in which dangerous pulsation may be expected. Spectrum peaks are normally much greater than the average spectrum amplitude and the amplitude of local peaks outside the monitored frequency bands. In the example of figure 4, a first peak amplitudes $A_1$ and a second peak amplitude $A_2$ are extracted in a first monitored band $B_1$ and in a second monitored band $B_2$, respectively. However, detection of peak amplitudes need not be confined to specific bands. For example, in one embodiment all peaks having amplitude exceeding a threshold may be detected. The threshold may be adaptively set e.g. as a function of the mean value and the standard deviation of the spectrum values. Each frequency corresponding to a respective peak and peak amplitude is defined as peak frequency of the respective peak. The processing unit 13 is further configured to compare the working time series $TSW_N$ of subsequent values if the peak amplitude $A_1$ with a respective individual amplitude threshold $ATH_N$. In this embodiment, the inadmissible ranges of values IRVI include peak amplitude values greater than the individual amplitude threshold $ATH_N$. The processing unit 13 may be configured to extract peak amplitudes from a plurality of programmed frequency bands. In one embodiment, each peak amplitude is individually monitored against activation criteria through a respective working time series $TSW_N$.

The monitoring may be extended to all the combustor units 8 or be limited to one or more of the combustor units 8, which for example may be known as more critical from design. The protecting measures may be activated e.g. when activation criteria are met for at least one of the combustor units 8, thus providing effective protection for each one of the combustor units 8.

In one embodiment, each combustor unit 8 is provided with a pulsation sensor 12 supplying a respective pulsation signal $P_N(t)$. The processing unit 13 is configured to determine also one or more azimuthal components $\boldsymbol{P^M(t)}$ of order M from the pulsation signals $P_N(t)$ (up to NC, NC being a number of combustor units 8 in the combustor assembly 5) and to compare spectral parameters of the azimuthal components $\boldsymbol{P^M(t)}$ (e.g. amplitude peaks and/or peak frequencies in given bands) with respective thresholds (amplitude thresholds and upper and lower frequency thresholds, respectively). The azimuthal components $\boldsymbol{P^M(t)}$ of order M are defined as

$$P^M(t) = \frac{1}{NC} \sum_{N=1}^{NC} P_N(t) e^{iM\theta_N}$$

where NC is the number of combustor units 8 in the com-

$$\theta_N = 2\pi \frac{N-1}{NC}$$

bustor assembly 5,              is the azimuthal angle of the N-th combustor unit 8 of the NC combustor units 8, $i$ is the imaginary unit, and azimuthal components have integer order M in the range [-ceil(NC/2) + 1; floor(NC/2)], wherein floor(NC/2) is the largest integer smaller than or equal to NC/2 and ceil(NC/2) is the smallest integer larger than or equal to NC/2. The azimuthal

$$\theta_N = 2\pi \frac{N-1}{NC}$$

angle            of the N-th combustor unit 8 (see figure 2) is defined as the angle between a reference plane $RP_1$, e.g. a radial median plane of a reference combustor unit 8, and a corresponding plane RPN of the N-th combustor unit 8, e.g. a radial median plane of the N-th combustor unit 8.

The azimuthal components $\boldsymbol{P^M(t)}$ of order M are pulsation signals themselves and provide further information on the pulsation state of the combustor units 8. Therefore, the azimuthal components $\boldsymbol{P^M(t)}$ of order M may be used to activate protecting measures.

The procedure described with reference to figure 3 may be then applied. Such a procedure, in fact, is independent of the specific nature of the pulsation signals used and of the specific spectral parameters selected for testing. In other words, the procedure does not depend on how the specific pulsation signals are generated, e.g. by pressure or optical or other sensors, and does not depend on whether the pulsation signals represent pulsations at a single respective combustor unit 8 (e.g. individual pulsation signals $P_N(t)$) or are provided as a combination of the pulsation signals $P_N(t)$ and thus represent combined effect of pulsations at different combustor units 8 (e.g. azimuthal components $P^M(t)$ of order M). Moreover, the spectral parameters may be peak amplitudes or peak frequencies as defined above and relevant amplitude and frequency thresholds may be used to define inadmissible ranges of values as appropriate. Spectral parameters of the examples of figures 4-10 and 12 may be spectral parameters of azimuthal components $P^M(t)$ of order M.

Hence, spectral parameters, such as peak amplitude $A_1$, $A_2$ or peak frequency $F_1$, $F_2$, of the azimuthal components $P^M(t)$ of order M may be extracted after applying FFT and raw time series $TSR_N$ of the spectral parameters may be built and iteratively updated. Spectral parameters may include peak amplitude and/or peak frequency of spectrum peaks in one or more monitored bands or throughout the whole spectrum for one or more or all of the azimuthal components $P^M(t)$, in any combination. The raw time series $TSR_N$ may be smoothed e.g. by low-pass filtering to produce working time series $TSW_N$, which are then tested for compliance with activation criteria as defined above. Compliance tests include comparing values of the working time series $TSW_N$ of the azimuthal components $P^M(t)$ with (azimuthal) amplitude and/or frequency thresholds and matching value criteria and/or time criteria. In one embodiment, the processing unit 13 determines azimuthal components $P^M(t)$ of all orders M in the range [-ceil(NC/2) + 1; floor(NC/2)]. In one embodiment, the processing unit 13 determines a combination of azimuthal components $P^M(t)$ of different orders M or of all orders M in the range [-ceil (NC/2) + 1; floor(NC/2)] and the working time series $TSW_N$ form the combination of azimuthal components $P^M(t)$.

In one embodiment, the processing unit 13 determines an azimuthal component of order 0, i.e. an in-phase pulsation component $P_{IP}(t)$ which is defined by

$$P_{IP}(t) = \frac{1}{NC} \sum_{N=1}^{NC} P_N(t)$$

The in-phase pulsation component $P_{IP}(t)$ is in turn a pulsation signal. The spectral parameters comprise an in-phase peak amplitude of the in-phase pulsation component $P_{IP}(t)$. The processing unit 13 is configured to update and compare the working time series $TSW_N$ of the in-phase peak amplitude of the in-phase pulsation component $P_{IP}(t)$ with a pulsation threshold (in-phase pulsation threshold). The inadmissible range of values includes in-phase pulsation values greater than the pulsation threshold. In-phase pulsation component $P_{IP}(t)$ may cause torsional vibration of the rotor 7. Thus, monitoring the spectral parameters of the in-phase pulsation component $P_{IP}(t)$ allows to activate protecting measures also against torsional vibration of the rotor, which may be thus prevented.

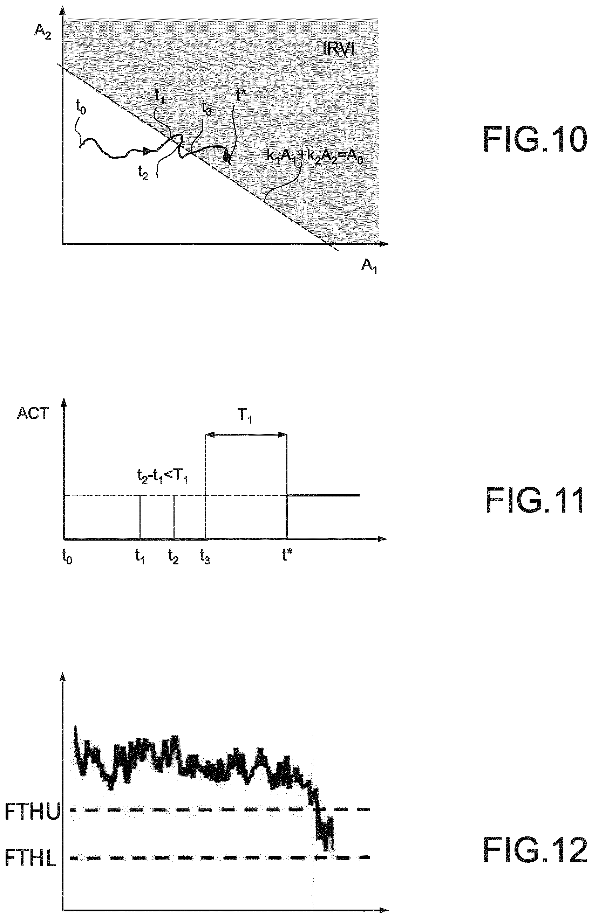

With reference to figures 4 and 10, in one embodiment the spectral parameters comprise a plurality of peak amplitudes $A_K$ in respective programmed frequency bands for each pulsation signal $P_N(t)$ and the processing unit 13 is configured to compare a combination of the working time series $TSW_N$ of the peak amplitudes $A_K$ with a combination amplitude threshold $A_0$. By way of non-limiting example, the combination may be a linear combination $k_1A_1 + ... + k_{NI}A_{NI}$ of values of the peak amplitudes $A_K$ for each pulsation signal $P_N(t)$, wherein NI is the number of significant peak amplitudes in the spectrum of the pulsation signal $P_N(t)$ and $K_1, ..., K_{NI}$ are coefficients of the linear combination. The inadmissible ranges of values IRVI for the pulsation signal $P_N(t)$ therefore includes the values of the combination greater than the combination amplitude threshold Ao:

$$IRVI = \{k_1A_1 + ... + k_{NI}A_{NI} > A_0\}.$$

In the example of figures 10-11, two peak amplitudes $A_1$, $A_2$ are considered as spectral parameters. The solid line in figure 10 exemplarily shows a plot of the working time series $TSW_N$. Figure 11 shows an activation signal ACT supplied by the processing unit 13 for activating protecting measures. The activation signal ACT switches to an activation value when the working time series $TSW_N$ remains in the inadmissible ranges of values IRVI for a time interval that exceeds the first time interval $T_1$.

With reference to figure 12, in one embodiment the spectral parameters comprise at least one peak frequency $F_1$ of a respective peak amplitude $A_1$ and the processing unit is further configured to compare the working time series of the peak frequency with a lower frequency threshold FTHL and an a upper frequency threshold FTHU. In this example, the inadmissible ranges of values IRVI includes a frequency band delimited by the lower frequency threshold FTHL and the upper frequency threshold FTHU.

It is finally apparent that changes and variations may be made to the gas turbine and method described and illustrated without departing from the scope of protection of the accompanying claims.

In particular, it is clear that any combination of the spectral parameters described may be advantageously used and monitored for the purpose of pulsation protection in accordance with design preferences.

## Claims

1. Gas turbine engine comprising:

   a combustor assembly (3), having a plurality of combustor units (8); and
   a control system (3), configured to control air supply and fuel supply to the combustor assembly (3);
   the control system (3) comprising:

   pulsation sensors (12) coupled to respective combustor units (8) and configured to provide pulsation signals ($P_N(t)$) from the respective combustor units (8), each combustor unit (8) being provided with a respective one of the pulsation sensors (12); and
   a processing unit (13) coupled to the pulsation sensors (12) to receive the pulsation signals ($P_N(t)$), the gas turbine engine being **characterized in that** the processing unit (13) is configured to:
   determine at least one azimuthal component ($P^M(t)$) of the pulsation signals ($P_N(t)$), the azimuthal pulsation component being defined by

   $$P^M(t) = \frac{1}{NC} \sum_{N=1}^{NC} P_N(t) e^{iM\theta_N}$$

   where NC is a number of can combustors (8) in the combustor assembly (3), $\theta_N = 2\pi \frac{N-1}{NC}$ is an azimuthal angle of a N-th of the can combustors (8) of the combustor assembly (3), $i$ is the imaginary unit, and M is an order of the at least one azimuthal component ($P^M(t)$) in the range [-ceil(NC/2) + 1; floor(NC/2)];
   determine working time series ($TSW_N$) of spectral parameters ($A_1$; $A_1$, $A_2$; $F_1$) from the at least one azimuthal component ($P^M(t)$) of the pulsation signals ($P_N(t)$); and
   to selectively activate protecting measures based on the working time series ($TSW_N$) and activation criteria.

2. The gas turbine engine according to claim 1, wherein the activation criteria include value criteria, defined by inadmissible ranges of values (IRVI) of the spectral parameters ($A_1$; $A_1$, $A_2$; $F_1$), in combination with time criteria based on permanence of the spectral parameters in the inadmissible ranges of values (IRVI), the time criteria preferably including at least one of:

   the spectral parameters ($A_1$; $A_1$, $A_2$; $F_1$) of the working time series ($TSW_N$) continuously remaining in the inadmissible ranges of values (IRVI) for at least a first time interval ($T_1$);
   the spectral parameters ($A_1$; $A_1$, $A_2$; $F_1$) of the working time series ($TSW_N$) continuously or discontinuously remaining in the inadmissible ranges of values (IRVI) for at least a cumulated second time interval ($T_2$) within a check window (W);
   a time counter (TC) reaching a count threshold (Co), the time counter (TC) being incremented by the processing unit (13) when the spectral parameters ($A_1$; $A_1$, $A_2$; $F_1$) of the working time series ($TSW_N$) are inside the inadmissible ranges of values (IRVI) and remaining unchanged or being decremented by the processing unit (13) when the spectral parameters of the working time series ($TSW_N$) are outside the inadmissible ranges of values (IRVI).

3. The gas turbine engine according to claim 2, wherein the spectral parameters comprise at least one peak amplitude ($A_1$; $A_1$, $A_2$) and the processing unit (13) is further configured to compare the working time series ($TSW_N$) of the peak amplitude ($A_1$; $A_1$, $A_2$) with a respective individual amplitude threshold ($ATH_N$), the inadmissible ranges of values (IRVI) including peak amplitude values greater than the individual amplitude threshold ($ATH_N$).

4. The gas turbine engine according to claim 3, wherein the spectral parameters comprise a plurality of peak amplitudes ($A_1$, $A_2$) in respective programmed frequency bands ($B_1$, $B_2$) for the at least one azimuthal component ($P^M(t)$) of the pulsation signals ($P_N(t)$) and the processing unit (13) is further configured to compare a combination of the working time series ($TSW_N$) of the peak amplitudes ($A_1$, $A_2$) with a combination amplitude threshold (Ao), the inadmissible ranges of values (IRVI) including the values of the combination greater than the combination amplitude threshold (Ao).

5. The gas turbine engine according to any one of claims 2 to 4, wherein the spectral parameters comprise at least one peak frequency ($F_1$) of a respective peak amplitude ($A_1$) and the processing unit (13) is further configured to compare the working time series ($TSW_N$) of the peak frequency ($F_1$) with a lower frequency threshold (FTHL) and an a upper frequency threshold (FTHU), the inadmissible ranges of values (IRVI) including a frequency band delimited by the lower frequency threshold (FTHL) and the upper frequency threshold (FTHU).

6. The gas turbine engine according to any one of claims 2 to 5, wherein the processing unit (13) is configured to determine the azimuthal components $(\boldsymbol{P^M(t)})$ of all an orders (M) in the range [-ceil(NC/2) + 1; floor(NC/2)].

7. The gas turbine engine according to any one of claims 2 to 6, wherein the processing unit (13) is configured to determine a combination of azimuthal components $(\boldsymbol{P^M(t)})$ of different orders (M) or of all orders (M) in the range [-ceil(NC/2) + 1; floor(NC/2)] and to determine the working time series (TSW$_N$) from the combination of azimuthal components $(\boldsymbol{P^M(t)})$.

8. The gas turbine engine according to any one of claims 2 to 7, wherein the processing unit (13) is configured to determine an in-phase pulsation component (P$_{IP}$(t)) as a 0-order azimuthal component $(\boldsymbol{P^M(t)})$ of the pulsation signals (P$_N$(t)) and to determine the working time series (TSW$_N$) from the in-phase pulsation component (P$_{IP}$(t)), the in-phase pulsation component (P$_{IP}$(t)) being defined by

$$P_{IP}(t) = \frac{1}{NC}\sum_{Ni=1}^{NC} P_{IN}(t)$$

9. Method of operating a gas turbine comprising a combustor assembly (3), having a plurality of combustor units (8), and a control system (3), configured to control air supply and fuel supply to the combustor assembly (3), each combustor unit (8) being provided with a respective one of the pulsation sensors (12); the method comprising:

providing pulsation signals (P$_{IN}$(t)) from each of the combustor units (8);
determining at least one azimuthal component $(\boldsymbol{P^M(t)})$ of the pulsation signals (P$_N$(t)), the azimuthal pulsation component being defined by

$$P^M(t) = \frac{1}{NC}\sum_{N=1}^{NC} P_N(t)e^{iM\theta_N}$$

where NC is a number of can combustors (8) in

$$\theta_N = 2\pi\frac{N-1}{NC}$$

the combustor assembly (3), is an azimuthal angle of a N-th of the can combustors (8) of the combustor assembly (3), $\boldsymbol{i}$ is the imaginary unit, and M is an order of the at least one azimuthal component $(\boldsymbol{P^M(t)})$ in the range [-ceil(NC/2) + 1; floor(NC/2)]; determining working time series (TSW$_N$) of spectral parameters (A$_1$; A$_1$, A$_2$; F$_1$) from the at least one azimuthal component $(\boldsymbol{P^M(t)})$ of the pulsation signals (P$_N$(t)); and
selectively activating protecting measures based on the working time series (TSW$_N$) and activation criteria;
wherein activating protecting measures comprises modifying air supply and/or fuel supply to the combustor assembly (3).

10. The method according to claim 9, wherein the activation criteria include value criteria, defined by inadmissible ranges of values (IRVI) of the spectral parameters (A$_1$; A$_1$, A$_2$; F$_1$), in combination with time criteria based on permanence of the spectral parameters in the inadmissible ranges of values (IRVI), the time criteria preferably including at least one of:

the spectral parameters (A$_1$; A$_1$, A$_2$; F$_1$) of the working time series (TSW$_N$) continuously remaining in the inadmissible ranges of values (IRVI) for at least a first time interval (T$_1$) ;
the spectral parameters (A$_1$; A$_1$, A$_2$; F$_1$) of the working time series (TSW$_N$) continuously or discontinuously remaining in the inadmissible ranges of values (IRVI) for at least a cumulated second time interval (T$_2$) within a check window (W) ;
a time counter (TC) reaching a count threshold (C$_0$), the time counter (TC) being incremented by the processing unit (13) when the spectral parameters (A$_1$; A$_1$, A$_2$; F$_1$) of the working time series (TSW$_N$) are inside the inadmissible ranges of values (IRVI) and remaining unchanged or being decremented by the processing unit (13) when the spectral parameters of the working time series (TSW$_N$) are outside the inadmissible ranges of values (IRVI).

11. The method according to claim 9 or 10, comprising determine the azimuthal components $(\boldsymbol{P^M(t)})$ of all an orders (M) in the range [-ceil(NC/2) + 1; floor(NC/2)].

12. The method according to any one of claims 9 to 11, comprising determining a combination of azimuthal components $(\boldsymbol{P^M(t)})$ of different orders (M) or of all orders (M) in the range [-ceil (NC/2) + 1; floor (NC/2)] and to determine the working time series (TSW$_N$) from the combination of azimuthal components $(\boldsymbol{P^M(t)})$.

13. The method according to any one of claims 9 to 12, comprising determining an in-phase pulsation component (P$_{IP}$(t)) as a 0-order azimuthal component $(\boldsymbol{P^M(t)})$ of the pulsation signals (P$_N$(t)) and to determine the working time series (TSW$_N$) from the in-phase pulsation component (P$_{IP}$(t)), the in-phase pulsation component (P$_{IP}$(t)) being defined by

$$P_{IP}(t) = \frac{1}{NC} \sum_{Ni=1}^{NC} P_{IN}(t)$$

**Patentansprüche**

1. Gasturbinenmaschine, umfassend:

   eine Brennkammeranordnung (3), die mehrere Brennkammereinheiten (8) aufweist; und ein Steuersystem (3), das dazu konfiguriert ist, die Luftzufuhr und die Brennstoffzufuhr zu der Brennkammeranordnung (3) zu steuern; wobei das Steuersystem (3) umfasst:

   Pulsationssensoren (12), die mit jeweiligen Brennkammereinheiten (8) gekoppelt sind und dazu konfiguriert sind, Pulsationssignale (PN(t)) von den jeweiligen Brennkammereinheiten (8) bereitzustellen, wobei jede Brennkammereinheit (8) mit einem jeweiligen der Pulsationssensoren (12) versehen ist; und eine Verarbeitungseinheit (13), die mit den Pulsationssensoren (12) gekoppelt ist, um die Pulsationssignale ($P_N(t)$) zu empfangen, wobei die Gasturbinenmaschine **dadurch gekennzeichnet ist, dass** die Verarbeitungseinheit (13) konfiguriert ist, um:

   wenigstens eine azimutale Pulsationskomponente ($P^M(t)$) der Pulsationssignale ($P_N(t)$) zu bestimmen, wobei die azimutale Pulsationskomponente definiert ist durch

   $$P^M(t) = \frac{1}{NC} \sum_{N=1}^{NC} P_N(t) e^{iM\theta_N}$$

   wobei NC eine Anzahl von Dosenbrennkammern (8) in der Brennkammeranordnung (3) ist,

   $$\theta_N = 2\pi \frac{N-1}{NC}$$

   ein azimutaler Winkel einer N-ten der Dosenbrennkammern (8) der Brennkammeranordnung (3) ist, i die imaginäre Einheit ist, und M eine Ordnung der wenigstens einen azimutalen Komponente ($P^M(t)$) in dem Bereich [-ceil(NC/2) + 1; floor(NC/2)] ist; eine Arbeitszeitreihe (TSW$_N$) von Spektralparametern (A$_1$;

   A$_1$, A$_2$; F$_1$) aus der wenigstens einen azimutalen Komponente ($P^M(t)$) der Pulsationssignale ($P_N(t)$) zu bestimmen; und basierend auf der Arbeitszeitreihe (TSW$_N$) und auf Aktivierungskriterien selektiv Schutzmaßnahmen zu aktivieren.

2. Gasturbinenmaschine nach Anspruch 1, wobei die Aktivierungskriterien Wertekriterien umfassen, die durch unzulässige Wertebereiche (IRVI) der Spektralparameter (A$_1$; A$_1$, A$_2$; F$_1$) definiert sind, in Kombination mit Zeitkriterien, die auf der Permanenz der Spektralparameter in den unzulässigen Wertebereichen (IRVI) basieren, wobei die Zeitkriterien vorzugsweise wenigstens eines umfassen von:

   die Spektralparameter (A$_1$; A$_1$, A$_2$; F$_1$) der Arbeitszeitreihe (TSW$_N$) verbleiben für wenigstens ein erstes Zeitintervall (T$_1$) kontinuierlich in den unzulässigen Wertebereichen (IRVI); die Spektralparameter (A$_1$; A$_1$, A$_2$; F$_1$) der Arbeitszeitreihe (TSW$_N$) verbleiben innerhalb eines Kontrollfensters (W) für wenigstens ein kumuliertes zweites Zeitintervall (T$_2$) kontinuierlich oder diskontinuierlich in den unzulässigen Wertebereichen (IRVI); ein Zeitzähler (TC) erreicht eine Zählschwelle (Co), wobei der Zeitzähler (TC) von der Verarbeitungseinheit (13) inkrementiert wird, wenn die Spektralparameter (A$_1$; A$_1$, A$_2$; F$_1$) der Arbeitszeitreihe (TSW$_N$) innerhalb der unzulässigen Wertebereiche (IRVI) liegen, und unverändert bleibt oder von der Verarbeitungseinheit (13) dekrementiert wird, wenn die Spektralparameter der Arbeitszeitreihe (TSW$_N$) außerhalb der unzulässigen Wertebereiche (IRVI) liegen.

3. Gasturbinenmaschine nach Anspruch 2, wobei die Spektralparameter wenigstens eine Spitzenamplitude (A$_1$; A$_1$, A$_2$) umfassen und die Verarbeitungseinheit (13) ferner dazu konfiguriert ist, die Arbeitszeitreihe (TSW$_N$) der Spitzenamplitude (A$_1$; A$_1$, A$_2$) mit einer jeweiligen individuellen Amplitudenschwelle (ATH$_N$) zu vergleichen, wobei die unzulässigen Wertebereiche (IRVI) Spitzenamplitudenwerte umfassen, die größer sind als die individuelle Amplitudenschwelle (ATH$_N$).

4. Gasturbinenmaschine nach Anspruch 3, wobei die Spektralparameter mehrere Spitzenamplituden (A$_1$, A$_2$) in jeweiligen programmierten Frequenzbändern (B$_1$, B$_2$) für die wenigstens eine azimutale Komponente ($P^M(t)$) der Pulsationssignale ($P_N(t)$) umfassen und die Verarbeitungseinheit (13) ferner dazu konfiguriert ist, eine Kombination der Arbeitszeitreihe (TSW$_N$) der Spitzenamplituden (A$_1$, A$_2$) mit einer

Kombinationsamplitudenschwelle (Ao) zu vergleichen, wobei die unzulässigen Wertebereiche (IRVI) die Werte der Kombination umfassen, die größer sind als die Kombinationsamplitudenschwelle (Ao).

5. Gasturbinenmaschine nach einem der Ansprüche 2 bis 4, wobei die Spektralparameter wenigstens eine Spitzenfrequenz ($F_1$) einer entsprechenden Spitzenamplitude ($A_1$) umfassen und die Verarbeitungseinheit (13) ferner dazu konfiguriert ist, die Arbeitszeitreihe ($TSW_N$) der Spitzenfrequenz ($F_1$) mit einer unteren Frequenzschwelle (FTHL) und einer oberen Frequenzschwelle (FTHU) zu vergleichen, wobei die unzulässigen Wertebereiche (IRVI) ein Frequenzband umfassen, das durch die untere Frequenzschwelle (FTHL) und die obere Frequenzschwelle (FTHU) begrenzt ist.

6. Gasturbinenmaschine nach einem der Ansprüche 2 bis 5, wobei die Verarbeitungseinheit (13) dazu konfiguriert ist, die azimutalen Komponenten ($P^M(t)$) aller Ordnungen (M) im Bereich [-ceil(NC/2) + 1; floor(NC/2)] zu bestimmen.

7. Gasturbinenmaschine nach einem der Ansprüche 2 bis 6, wobei die Verarbeitungseinheit (13) dazu konfiguriert ist, eine Kombination von azimutalen Komponenten ($P^M(t)$) verschiedener Ordnungen (M) oder aller Ordnungen (M) im Bereich [-ceil(NC/2) + 1; floor(NC/2)] zu bestimmen und die Arbeitszeitreihe ($TSW_N$) aus der Kombination von azimutalen Komponenten ($P^M(t)$) zu bestimmen.

8. Gasturbinenmaschine nach einem der Ansprüche 2 bis 7, wobei die Verarbeitungseinheit (13) dazu konfiguriert ist, eine gleichphasige Pulsationskomponente ($P_{IP}(t)$) als eine azimutale Komponente 0-ter Ordnung ($P^M(t)$) der Pulsationssignale ($P_N(t)$) zu bestimmen und die Arbeitszeitreihe ($TSW_N$) aus der gleichphasigen Pulsationskomponente ($P_{IP}(t)$) zu bestimmen, wobei die gleichphasige Pulsationskomponente ($P_{IP}(t)$) definiert ist durch

$$P_{IP}(t) = \frac{1}{NC} \sum_{Ni=1}^{NC} P_{IN}(t)$$

9. Verfahren zum Betreiben einer Gasturbine, die eine Brennkammeranordnung (3) mit mehreren Brennkammereinheiten (8) und ein Steuersystem (3) umfasst, das dazu konfiguriert ist, die Luftzufuhr und die Brennstoffzufuhr zu der Brennkammeranordnung (3) zu steuern, wobei jede Brennkammereinheit (8) mit einem entsprechenden Pulsationssensor (12) versehen ist;
wobei das Verfahren umfasst:

Bereitstellen von Pulsationssignalen ($P_{IN}(t)$) von jeder der Brennkammereinheiten (8);
Bestimmen wenigstens einer azimutalen Komponente ($P^M(t)$) der Pulsationssignale ($P_N(t)$), wobei die azimutale Pulsationskomponente definiert ist durch

$$P^M(t) = \frac{1}{NC} \sum_{N=1}^{NC} P_N(t) e^{iM\theta_N}$$

wobei NC eine Anzahl von Dosenbrennkammern (8) in der Brennkammeranordnung (3) ist,

$\theta_N = 2\pi \frac{N-1}{NC}$ ein azimutaler Winkel einer N-ten der Dosenbrennkammern (8) der Brennkammeranordnung (3) ist, i die imaginäre Einheit ist, und M eine Ordnung der wenigstens einen azimutalen Komponente ($P^M(t)$) in dem Bereich [-ceil(NC/2) + 1; floor(NC/2)] ist;
Bestimmen einer Arbeitszeitreihe ($TSW_N$) von Spektralparametern ($A_1$; $A_1$, $A_2$; $F_1$) aus der wenigstens einen azimutalen Komponente ($P^M(t)$ der Pulsationssignale ($P_N(t)$); und
selektives Aktivieren von Schutzmaßnahmen basierend auf der Arbeitszeitreihe ($TSW_N$) und auf Aktivierungskriterien; wobei das Aktivieren von Schutzmaßnahmen das Modifizieren der Luftzufuhr und/oder der Brennstoffzufuhr zu der Brennkammeranordnung (3) umfasst.

10. Verfahren nach Anspruch 9, wobei die Aktivierungskriterien Wertekriterien umfassen, die durch unzulässige Wertebereiche (IRVI) der Spektralparameter ($A_1$; $A_1$, $A_2$; $F_1$) definiert sind, in Kombination mit Zeitkriterien, die auf der Permanenz der Spektralparameter in den unzulässigen Wertebereichen (IRVI) basieren, wobei die Zeitkriterien vorzugsweise wenigstens eines umfassen von:

die Spektralparameter ($A_1$; $A_1$, $A_2$; $F_1$) der Arbeitszeitreihe ($TSW_N$) verbleiben für wenigstens ein erstes Zeitintervall ($T_1$) kontinuierlich in den unzulässigen Wertebereichen (IRVI);
die Spektralparameter ($A_1$; $A_1$, $A_2$; $F_1$) der Arbeitszeitreihe ($TSW_N$) verbleiben innerhalb eines Kontrollfensters (W) für wenigstens ein kumuliertes zweites Zeitintervall ($T_2$) kontinuierlich oder diskontinuierlich in den unzulässigen Wertebereichen (IRVI);
ein Zeitzähler (TC) erreicht eine Zählschwelle (Co), wobei der Zeitzähler (TC) von der Verarbeitungseinheit (13) inkrementiert wird, wenn die Spektralparameter ($A_1$; $A_1$, $A_2$;
$F_1$) der Arbeitszeitreihe ($TSW_N$) innerhalb der unzulässigen Wertebereiche (IRVI) liegen, und unverändert bleibt oder von der Verarbeitungseinheit (13) dekrementiert wird, wenn die Spektralparameter der Arbeitszeitreihe ($TSW_N$) außerhalb der unzulässigen Wertebereiche (IRVI) liegen.

11. Verfahren nach Anspruch 9 oder 10, umfassend ein Bestimmen der azimutalen Komponenten ($P^M(t)$) aller Ordnungen (M) im Bereich [-ceil(NC/2) + 1; floor(NC/2)].

12. Verfahren nach einem der Ansprüche 9 bis 11, umfassend ein Bestimmen einer Kombination von azimutalen Komponenten ($P^M(t)$) verschiedener Ordnungen (M) oder aller Ordnungen (M) im Bereich [-ceil(NC/2) + 1; floor(NC/2)], und das Bestimmen der Arbeitszeitreihe ($TSW_N$) aus der Kombination von azimutalen Komponenten ($P^M(t)$).

13. Verfahren nach einem der Ansprüche 9 bis 12, umfassend ein Bestimmen einer gleichphasigen Pulsationskomponente ($P_{IP}(t)$) als azimutale Komponente 0-ter Ordnung ($P^M(t)$) der Pulsationssignale ($P_N(t)$) und das Bestimmen der Arbeitszeitreihe ($TSW_N$) aus der gleichphasigen Pulsationskomponente ($P_{IP}(t)$), wobei die gleichphasige Pulsationskomponente ($P_{IP}(t)$) definiert ist durch

$$P_{IP}(t) = \frac{1}{NC} \sum_{Ni=1}^{NC} P_{IN}(t)$$

**Revendications**

1. Moteur de turbine à gaz comprenant :

   un ensemble chambre de combustion (3), ayant une pluralité d'unités de chambre de combustion (8) ; et
   un système de commande (3), configuré pour commander l'alimentation en air et l'alimentation en carburant de l'ensemble chambre de combustion (3) ;
   le système de commande (3) comprenant :

   des capteurs de pulsation (12) couplés à des unités de chambre de combustion (8) respectives et configurés pour fournir des signaux de pulsation ($P_N(t)$) provenant des unités de chambre de combustion (8) respectives, chaque unité de chambre de combustion (8) étant pourvue d'un capteur respectif des capteurs de pulsation (12) ; et
   une unité de traitement (13) couplée aux capteurs de pulsation (12) pour recevoir les signaux de pulsation ($P_N(t)$), le moteur de turbine à gaz étant **caractérisé en ce que** l'unité de traitement (13) est configurée pour :

   déterminer au moins une composante azimutale ($P^M(t)$) des signaux de pulsation ($P_N(t)$), la composante de pulsation azimutale étant définie par

$$P^M(t) = \frac{1}{NC} \sum_{N=1}^{NC} P_N(t) e^{iM\theta_N}$$

   où NC est un nombre de chambres de combustion tubulaires (8) dans l'ensemble chambre de combustion (3),

$$\theta_N = 2\pi \frac{N-1}{NC}$$

   est un angle azimutal d'une N-ième des chambres de combustion tubulaires (8) de l'ensemble chambre de combustion (3), i est l'unité imaginaire, et M est un ordre de la au moins une composante azimutale ($P^M(t)$) dans la plage [-ceil (NC/2) + 1 ; floor (NC/2)] ;
   déterminer des séries temporelles de travail ($TSW_n$) de paramètres spectraux ($A_1$; $A_1$, $A_2$; $F_1$) à partir de la au moins une composante azimutale ($P^M(t)$) des signaux de pulsation ($P_N(t)$) ; et
   pour activer sélectivement les mesures de protection en fonction de la série temporelle de travail ($TSW_n$) et de critères d'activation.

2. Moteur de turbine à gaz selon la revendication 1, dans lequel les critères d'activation comprennent des critères de valeur, définis par des plages de valeurs inadmissibles (IRVI) des paramètres spectraux ($A_1$ ; $A_1$, $A_2$; $F_1$), en combinaison avec des critères de temps fondés sur la permanence des paramètres spectraux dans les plages de valeurs inadmissibles (IRVI), les critères de temps comprenant de préférence au moins l'un des éléments suivants :

   les paramètres spectraux ($A_1$ ; $A_1$, $A_2$ ; $F_1$) de la série temporelle de travail ($TSW_n$) restant continuellement dans les plages de valeurs inadmissibles (IRVI) pendant au moins un premier intervalle de temps ($T_1$) ;
   les paramètres spectraux ($A_1$ ; $A_1$, $A_2$ ; $F_1$) de la série temporelle de travail ($TSW_n$) restant de manière continue ou discontinue dans les plages de valeurs inadmissibles (IRVI) pendant au moins un second intervalle de temps cumulé ($T_2$) à l'intérieur d'une fenêtre de contrôle (W) ; un compteur de temps (TC) atteignant un seuil de comptage (Co), le compteur de temps (TC) étant incrémenté par l'unité de traitement (13) lorsque les paramètres spectraux ($A_1$ ; $A_1$, $A_2$ ; $F_1$) de la série temporelle de travail ($TSW_n$) sont à l'intérieur des plages de valeurs inadmissibles (IRVI) et restant inchangé ou étant décrémenté par l'unité de traitement (13) lorsque les paramètres spectraux de la série temporelle de travail ($TSW_n$) sont à l'extérieur des plages de valeurs inadmissibles (IRVI).

**3.** Moteur de turbine à gaz selon la revendication 2, dans lequel les paramètres spectraux comprennent au moins une amplitude de crête ($A_1$ ; $A_1$, $A_2$) et l'unité de traitement (13) est en outre configurée pour comparer la série temporelle de travail ($TSW_n$) de l'amplitude de crête ($A_1$ ; $A_1$, $A_2$) à un seuil d'amplitude individuel ($ATH_n$) respectif, les plages de valeurs inadmissibles (IRVI) comprenant des valeurs d'amplitude de crête supérieures au seuil d'amplitude individuel ($ATH_n$).

**4.** Moteur de turbine à gaz selon la revendication 3, dans lequel les paramètres spectraux comprennent une pluralité d'amplitudes de crête ($A_1$, $A_2$) dans des bandes de fréquence programmées ($B_1$, $B_2$) respectives pour la au moins une composante azimutale ($P^M(t)$) des signaux de pulsation ($P_N(t)$) et l'unité de traitement (13) est en outre configurée pour comparer une combinaison des séries temporelles de travail ($TSW_n$) des amplitudes de crête ($A_1$, $A_2$) à un seuil d'amplitude de combinaison ($A_0$), les plages de valeurs inadmissibles (IRVI) comprenant les valeurs de la combinaison supérieures au seuil d'amplitude de combinaison ($A_0$).

**5.** Moteur de turbine à gaz selon l'une quelconque des revendications 2 à 4, dans lequel les paramètres spectraux comprennent au moins une fréquence de crête ($F_1$) d'une amplitude de crête ($A_1$) respective et l'unité de traitement (13) est en outre configurée pour comparer la série temporelle de travail ($TSW_n$) de la fréquence de crête ($F_1$) à un seuil de fréquence inférieur (FTHL) et un seuil de fréquence supérieur (FTHU), les plages de valeurs inadmissibles (IRVI) comprenant une bande de fréquences délimitée par le seuil de fréquence inférieur (FTHL) et le seuil de fréquence supérieur (FTHU).

**6.** Moteur de turbine à gaz selon l'une quelconque des revendications 2 à 5, dans lequel l'unité de traitement (13) est configurée pour déterminer les composantes azimutales (PM(t)) de tous les ordres (M) dans la plage [-ceil (NC/2) + 1 ; floor (NC/2)].

**7.** Moteur de turbine à gaz selon l'une quelconque des revendications 2 à 6, dans lequel l'unité de traitement (13) est configurée pour

déterminer une combinaison de composantes azimutales ($P^M(t)$) de différents ordres (M) ou de tous les ordres (M) dans la plage [-ceil (NC/2) + 1 ; floor (NC/2)] et pour déterminer la série temporelle de travail ($TSW_n$) à partir de la combinaison des composantes azimutales ($P^M(t)$).

**8.** Moteur de turbine à gaz selon l'une quelconque des revendications 2 à 7, dans lequel l'unité de traitement (13) est configurée pour déterminer une composante de pulsation en phase ($P_{IP}(t)$) en tant que composante azimutale d'ordre 0 ($P^M(0)$) des signaux de pulsation ($P_N(t)$) et pour déterminer la série temporelle de travail ($TSW_n$) à partir de la composante de pulsation en phase ($P_{IP}(t)$), la composante de pulsation en phase ($P_{IP}(t)$) étant définie par

$$P_{IP}(t) = \frac{1}{NC} \sum_{Ni=1}^{NC} P_{IN}(t)$$

**9.** Procédé de fonctionnement d'une turbine à gaz comprenant un ensemble chambre de combustion (3), ayant une pluralité d'unités de chambre de combustion (8), et un système de commande (3), configuré pour commander l'alimentation en air et l'alimentation en carburant de l'ensemble chambre de combustion (3), chaque unité de chambre de combustion (8) étant pourvue d'un capteur respectif des capteurs de pulsation (12) ; le procédé comprenant :

la fourniture de signaux de pulsation ($P_{IN}(t)$) à partir de chacune des unités de chambre de combustion (8) ; la détermination d'au moins une composante azimutale ($P^M(t)$) des signaux de pulsation ($P_N(t)$), la composante de pulsation azimutale étant définie par

$$P^M(t) = \frac{1}{NC} \sum_{N=1}^{NC} P_N(t) e^{iM\theta_N}$$

où NC est un nombre de chambres de combustion tubulaires (8) dans l'ensemble chambre de combustion (3), $\theta_N = 2\pi \frac{N-1}{NC}$ est un angle azimutal d'une N-ième des chambres de combustion tubulaires (8) de l'ensemble chambre de combustion (3), i est l'unité imaginaire, et M est un ordre de la au moins une composante azimutale ($P^M(t)$) dans la plage [-ceil (NC/2) + 1 ; floor (NC/2)] ;

la détermination des séries temporelles de travail ($TSW_n$) de paramètres spectraux ($A_1$; $A_1$, $A_2$; $F_1$) à partir de la au moins une composante azimutale ($P^M(t)$) des signaux de pulsation (PN(t)) ; et

l'activation sélective de mesures de protection en fonction de la série temporelle de travail ($TSW_n$) et de critères d'activation ;

dans lequel l'activation des mesures de protection comprend la modification de l'alimentation en air et/ou de l'alimentation en carburant de l'ensemble chambre de combustion (3).

10. Procédé selon la revendication 9, dans lequel les critères d'activation comprennent des critères de valeur, définis par des plages de valeurs inadmissibles (IRVI) des paramètres spectraux ($A_1$; $A_1$, $A_2$; $F_1$), en combinaison avec des critères de temps fondés sur la permanence des paramètres spectraux dans les plages de valeurs inadmissibles (IRVI), les critères de temps comprenant de préférence au moins l'un des éléments suivants :

les paramètres spectraux ($A_1$ ; $A_1$, $A_2$ ; $F_1$) de la série temporelle de travail ($TSW_n$) restant continuellement dans les plages de valeurs inadmissibles (IRVI) pendant au moins un premier intervalle de temps ($T_1$) ;

les paramètres spectraux ($A_1$; $A_1$, $A_2$ ; $F_1$) de la série temporelle de travail ($TSW_n$) restant de manière continue ou discontinue dans les plages de valeurs inadmissibles (IRVI) pendant au moins un second intervalle de temps cumulé ($T_2$) à l'intérieur d'une fenêtre de contrôle (W) ;

un compteur de temps (TC) atteignant un seuil de comptage (Co), le compteur de temps (TC) étant incrémenté par l'unité de traitement (13) lorsque les paramètres spectraux ($A_1$ ; $A_1$, $A_2$; $F_1$) de la série temporelle de travail ($TSW_n$) sont à l'intérieur des plages de valeurs inadmissibles (IRVI) et restant inchangé ou étant décrémenté par l'unité de traitement (13) lorsque les paramètres spectraux de la série temporelle de travail ($TSW_n$) sont à l'extérieur des plages de valeurs inadmissibles (IRVI).

11. Procédé selon la revendication 9 ou 10, comprenant la détermination des composantes azimutales ($P^M(t)$) de tous les ordres (M) dans la plage [-ceil (NC/2) + 1 ; floor (NC/2)].

12. Procédé selon l'une quelconque des revendications 9 à 11, comprenant la détermination d'une combinaison de composantes azimutales ($P^M(t)$) d'ordres différents (M) ou de tous les ordres (M) dans la plage [-ceil (NC/2) + 1 ; floor (NC/2)] et la détermination de la série temporelle de travail ($TSW_n$) à partir de la combinaison de composantes azimutales ($P^M(t)$).

13. Procédé selon l'une quelconque des revendications 9 à 12, comprenant la détermination d'une composante de pulsation en phase ($P_{IP}(t)$) en tant que composante azimutale d'ordre 0 ($P^M(t)$) des signaux de pulsation ($P_N(t)$) et la détermination de la série temporelle de travail ($TSW_n$) à partir de la composante de pulsation en phase ($P_{IP}(t)$), la composante de pulsation en phase ($P_{IP}(t)$) étant définie par

$$P_{IP}(t) = \frac{1}{NC} \sum_{Ni=1}^{NC} P_{IN}(t)$$

FIG.1

FIG.2

**FIG.3**

FIG.4

FIG.5

FIG.6

FIG.7

FIG.8

FIG.9

FIG.10

FIG.11

FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007062196 A